# EUROPEAN PATENT APPLICATION

(11) **EP 3 067 224 A1**
(43) Date of publication of application: **14.09.2016**
(21) Application number: 14898781.1
(22) Date of filing: 31.07.2014
(51) Int. Cl.: B60D 5/00

(54) **ARTICULATED CHASSIS SYSTEM FOR FRONT- AND CENTRE-DRIVE ARTICULATED BUS**

(30) Priority: 28.07.2014 CN 201410363293
(71) Applicant: Jointech (Suzhou) Vehicle System Co., Ltd., Suzhou, Jiangsu 215211 (CN)
(72) Inventor: HAO, Qingjun, Suzhou Jiangsu 215211 (CN)
(74) Representative: Sun, Yiming
(86) International application number: PCT/CN2014/083384
(87) International publication number: WO 2016/015268

(57) **Abstract**

The present invention discloses an articulated chassis system for a front- and centre-drive articulated bus, comprising a front frame, a rear frame, and a turntable bearing. The front frame comprises an upper connecting platform and a lower connecting platform. The lower connecting platform has a support hole arrangement part. A plurality of support holes is arranged on both the upper surface of the upper connecting platform and the support hole arrangement part of the lower connecting platform. Curved rotation of the front and the rear frame is achieved by means of the turntable bearing, thereby improving the connection strength of both. Moreover, The structure of the front and rear frames is optimized by using finite element analysis, so that the load-bearing capacity of the connecting point of the articulated system is more uniformly dispersed; while the structure of the entire articulated system is also more rational, practical, and lightweight.

## Description

### Technical Field

The present invention relates to the technical field of articulated chassis systems for articulated buses, and in particular, to an articulated chassis system for a front- and centre-drive articulated bus, where the articulated chassis system has relatively high safety performance, bearing capability, and anti-torsion performance.

### Background

With the rapid development of automobile manufacturing, manufacturing of various vehicles also develops rapidly. An articulated bus has advantages such as a high passenger capacity and a high utilization rate and has gradually gained popularity in large and mid-sized cities in China. An articulated bus is generally formed of front and rear trailer sections, an articulated chassis system that connects the front and rear trailer sections, and the like.

A conventional articulated system product for a front-drive articulated bus has an advantage of connecting front and rear trailer sections by means of one ball pivot. In a special working condition or a fatigued condition, if a fracture appears on a ball pivot, the connection of an articulated system is basically broken. To mitigate such a risk, a set of protection solutions is generally added to such an articulated mechanism. That is, a traction frame between front and rear trailer sections uses one more wire rope for connection. An articulated mechanism having such a structure is relatively weak in aspects of connection strength and anti-torsion capability because of a relatively small quantity of connecting points, and only the safety in technical logic is improved a little bit with the addition of a wire rope connection.

In addition, a front frame and a rear frame of an articulated system are connected by means of upper and lower pins between the front frame and the rear frame and are then secured by means of connecting bolts of the pins. The front frame and the rear frame are separated if the upper pin connecting the front frame and the rear frame is fractured. The safety in technical logic is not desirable in terms of structure. Moreover, the conventional articulated system has a relatively large thickness and is not suitable for use in a low-floor articulated bus.

As can be seen, an original front- and centre-drive articulated chassis system has a connecting point with a single structure, is subject to a force that is not dispersed, has a big safety hazard, and has a large volume and a heavy weight. For a front-drive bus, a front trailer section pulls a rear trailer section. During steering, the inertia of the rear trailer section is relatively large, and a dome-hinge connecting portion is damaged relatively severely. How to resolve an issue of connection safety between a front- and centre-drive articulated vehicle and improve the bearing capability and anti-torsion performance at an articulation point becomes a major technical difficulty in the field of articulation technologies.

### Summary

An objective of the present invention is to overcome defects in the prior art, and an articulated chassis system for a front- and centre-drive articulated bus is provided, which has a compact structure and high practicability, improves reliability and safety of the connecting point of articulation, and achieves that the load-bearing capacity of the articulated system is more uniformly dispersed, so that the articulated chassis system can be used in a low-floor articulated bus and has a relatively wide application scope.

To achieve the foregoing objective, the present invention proposes the following technical solution: An articulated chassis system for a front- and centre-drive articulated bus comprises a front frame, a rear frame, and a turntable bearing, the front frame and the rear frame being rotatably connected by means of the turntable bearing; the front frame comprises an upper connecting platform and a lower connecting platform located below the upper connecting platform, one end of the upper connecting platform being connected to one end of the lower connecting platform, and a dome-hinge mounting part located between the upper connecting platform and the lower connecting platform being arranged at the other end; the lower connecting platform has a support hole arrangement part being exposed outside the upper connecting platform; the upper surface of the upper connecting platform is curved; and a plurality of support holes is arranged on both the upper surface of the upper connecting platform and the support hole arrangement part of the lower connecting platform, the support holes being distributed at outer edges of the upper connecting platform and the support hole arrangement part.

Furthermore, a flange is symmetrically arranged on the left and right sides of the lower connecting platform, and the flange is located at a position, near the dome-hinge mounting part, of the support hole arrangement part.

A plurality of connecting columns is arranged on the flange, and some of the support holes of the support hole arrangement part are arranged on the connecting columns.

The dome-hinge mounting part comprises a first dome-hinge mounting part, a second dome-hinge mounting part, and a third dome-hinge mounting part located between the first and second dome-hinge mounting parts, and a dome-hinge mounting hole is arranged on each dome-hinge mounting part.

The third dome-hinge mounting part comprises a dome-hinge mounting body and two articulated arms fixed on the outer surface of the dome-hinge mounting body, and the dome-hinge mounting hole is arranged inside the dome-hinge mounting body.

The turntable bearing comprises an inner race and an outer race, the inner race and the outer race are concentrically arranged and are rotatably connected to each other, the front frame is fixedly connected to the inner race of the turntable bearing, the rear frame is fixedly connected to the outer race of the turntable bearing, and the front frame and the rear frame are respectively connected to the inner race and the outer race of the turntable bearing to achieve mutual rotation.

A plurality of rear frame fixing holes used to fix a rear frame is uniformly arranged in a circumferential direction of the outer race of the turntable bearing, and outer race fixing holes corresponding to the rear frame fixing holes are arranged on the rear frame; and a plurality of front frame fixing holes used to fix a front frame is uniformly arranged in a circumferential direction of the inner race of the turntable bearing, and inner race fixing holes corresponding to the front frame fixing holes are arranged on the front frame.

A ball raceway is arranged between the inner race and the outer race of the turntable bearing, a plurality of balls is arranged inside the ball raceway, and mutual rotation of the inner race and the outer race of the turntable bearing is achieved by means of the balls.

A plurality of lubrication interfaces is arranged on the circumferential surface of an inner race of the turntable bearing, and the lubrication interface is connected to the ball raceway.

The articulated chassis system for a front- and centre-drive articulated bus further comprises a lubrication apparatus, the lubrication apparatus comprises a lubricator and a lubrication pipe, the lubrication pipe is connected to the lubrication interface and the ball raceway, and the lubricator is mounted on the rear frame.

A plurality of lubrication interfaces is further arranged on the circumferential surface of the inner race of the turntable bearing, and the lubrication pipe is connected to the ball raceway by means of the lubrication interface.

The front frame and the rear frame both use a cavity structure.

Beneficial effects of the present invention are as follows:
1. For the articulated chassis system for a front- and centre-drive articulated bus of the present invention, curved rotation of the front frame and the rear frame is achieved by means of the turntable bearing. Compared with an existing manner in which a single dome-hinge structure connects the front and rear frames, the present invention uses a connection manner of a turntable bearing, so that the connection strength between the front and rear frames is greatly improved and the safety coefficient of the connection is high.
2. In the present invention, finite element analysis is used to optimize the structure of the front and rear frames. A plurality of support holes connected to another platform is distributed on the front frame, so that the load-bearing capacity of the connecting point of the articulated system is more uniformly dispersed; while the structural strength of the articulated system is ensured, the flowability and formability of castings of the front and rear frames in a casting process are more rational. In the brand new structural design, excessive parts are removed, so that the structure of the entire articulated system becomes more rational, practical, and lightweight; meanwhile, raw materials are saved, and an unnecessary resource waste is avoided.
3. The front-frame three-dome-hinge structure of the present invention ensures strength of connections between the front frame and the front trailer section, and improves bearing performance of the front frame.
4. In the present invention, the lubrication apparatus is further arranged. The lubrication pipe is used to lubricate the balls in the turntable bearing, so that it is ensured that an accident does not occur because the balls are blocked; meanwhile, the service life of the balls is also extended.

### Brief Description of the Drawings

FIG. 1 is a schematic structural view of front and rear beam assemblies, being assembled, of an articulated chassis system for a front- and centre-drive articulated bus according to the present invention;
FIG. 2 is a schematic structural sectional view of a front beam assembly according to the present invention;
FIG. 3 is a 3D schematic structural view of a front beam assembly according to the present invention;
FIG. 4 is a schematic structural view of a rear beam assembly according to the present invention;
FIG. 5 is a 3D schematic exploded view of an articulated chassis system for a front- and centre-drive articulated bus according to the present invention;
FIG. 6 is a 3D schematic structural view of a front frame according to the present invention;
FIG. 7 is a planar schematic structural view of a front frame according to the present invention;
FIG. 8 is a 3D schematic structural view of a front frame according to the present invention;
FIG. 9 is a schematic structural view of a turntable bearing and a lubrication apparatus according to the present invention; and
FIG. 10 is an overall schematic structural view of front and rear beam assemblies, being assembled to front and rear trailer sections, of an articulated chassis system for a front- and centre-drive articulated bus according to the present invention.

### Detailed Description of Embodiments

The technical solutions in the embodiments of the present invention are described below clearly and completely with reference to the accompanying drawings of the present invention.

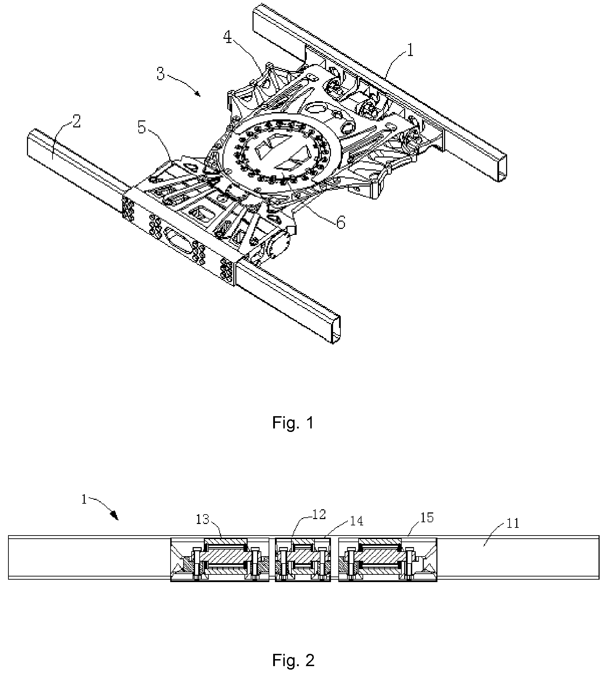

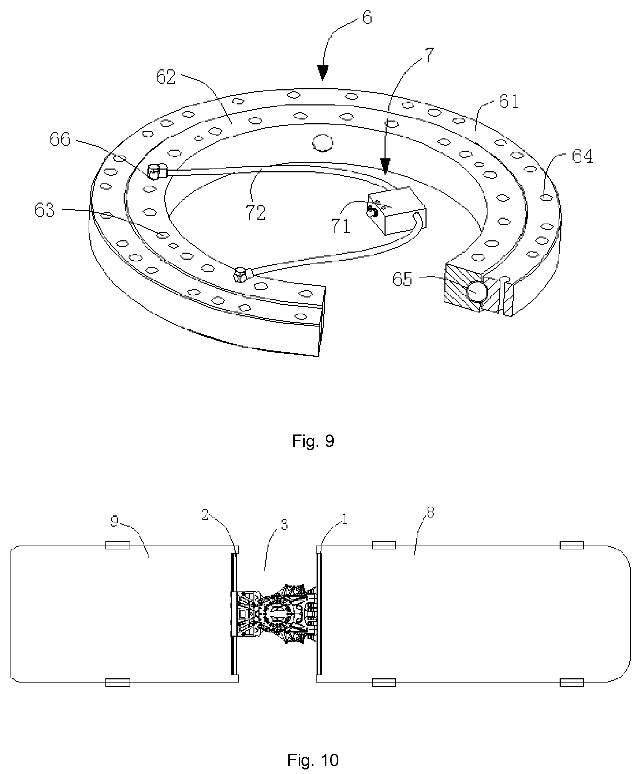

An articulated chassis system disclosed in the present invention is used to connect front and rear trailer sections of an articulated bus and is mainly applicable to a front- and centre-drive articulated bus. With reference to FIG. 1 and FIG. 10, the articulated chassis system is mounted between a front beam assembly 1 and a rear beam assembly 2. The front beam assembly 1 is fixedly connected to a front trailer section 8 of the articulated bus. The rear beam assembly 2 is fixedly connected to a rear trailer section 9 of the articulated bus. An articulated chassis system 3 achieves articulation between the front and rear trailer sections of the articulated bus by means of the front beam assembly 1 and the rear beam assembly 2.

As shown in FIG. 2, the front beam assembly 1 includes a front beam 11 and a dome-hinge support 12. One end of the front beam 11 is fixed on the front trailer section, and the other end is fixed on the dome-hinge support 12, where a welding manner may be used for fixation. In this embodiment of the present invention, the front beam 11 is a hollow reinforced square pipe. That is, the wall thickness of the square pipe is correspondingly increased, thereby enhancing the overall strength of the front beam assembly 1. The dome-hinge support 12 is arranged on a same side of the front beam 11, and includes a left support 13, a right support 14, and a middle support 15. Each support may be fixed on the front beam 11 in a welding manner.

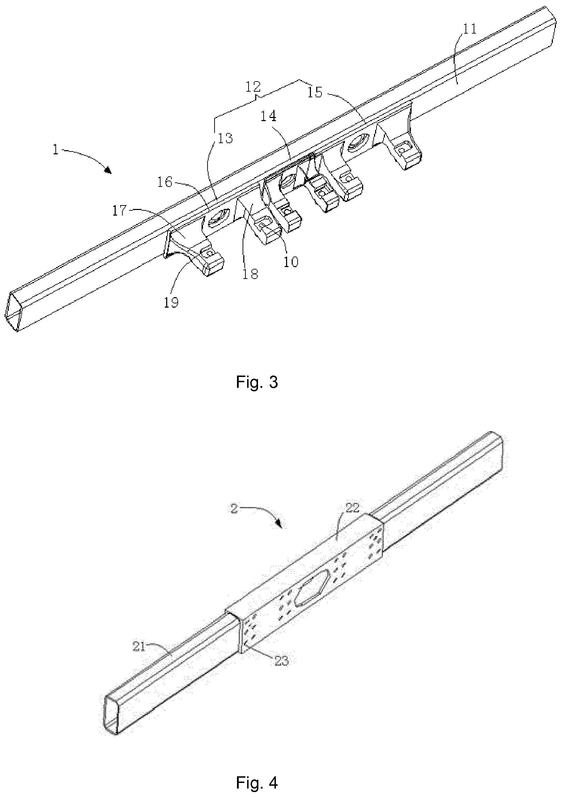

As shown in FIG. 3, each support 13, 14, 15 includes a fixing plate 16, a first fixing base 17, and a second fixing base 18. The first fixing base 17 and the second fixing base 18 are arranged on a same side of the fixing plate 16, and grooves 19 are symmetrically arranged on the first fixing base 17 and the second fixing base 18. A threaded hole 10 that passes through the first fixing base 17 or the second fixing base 18 is arranged inside each groove 19.

As shown in FIG. 4, the rear beam assembly 2 includes a rear beam 21 and a reinforcing piece 22. The reinforcing piece 22 is sleeved over the rear beam 21, and is fixedly connected to the rear beam 21, and a plurality of first bolt holes 23 is correspondingly arranged on the rear beam 21 and the reinforcing piece 22.

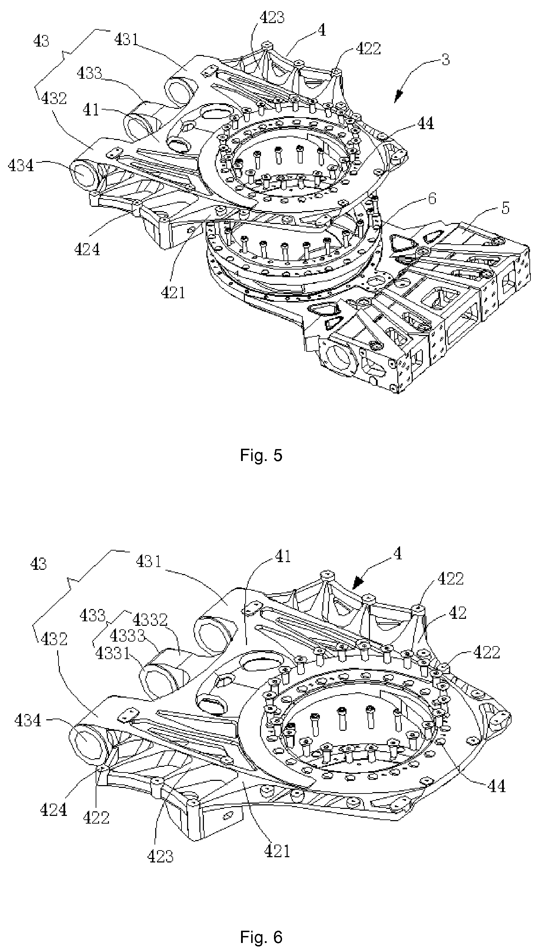

As shown in FIG. 5, the articulated chassis system 3 for a front- and centre-drive articulated bus disclosed in the present invention includes a front frame 4, a rear frame 5, and a turntable bearing 6 connecting the front frame 4 and the rear frame 5. The front frame 4 and the rear frame 5 are rotatably connected by means of the turntable bearing 6. The front frame 4 is fixedly connected to the front beam assembly 1 by means of a dome hinge. With reference to FIG. 5 and FIG. 6, the front frame 4 includes an upper connecting platform 41 and a lower connecting platform 42. The lower connecting platform 42 is located below the upper connecting platform 41, and one end of the upper connecting platform 41 is connected to one end of the lower connecting platform 42. A hollow sandwiched layer is provided at the middle portion. A dome-hinge mounting part 43 is arranged at the other end. The lower connecting platform 42 has a support hole arrangement part 421 exposed outside the upper connecting platform 41.

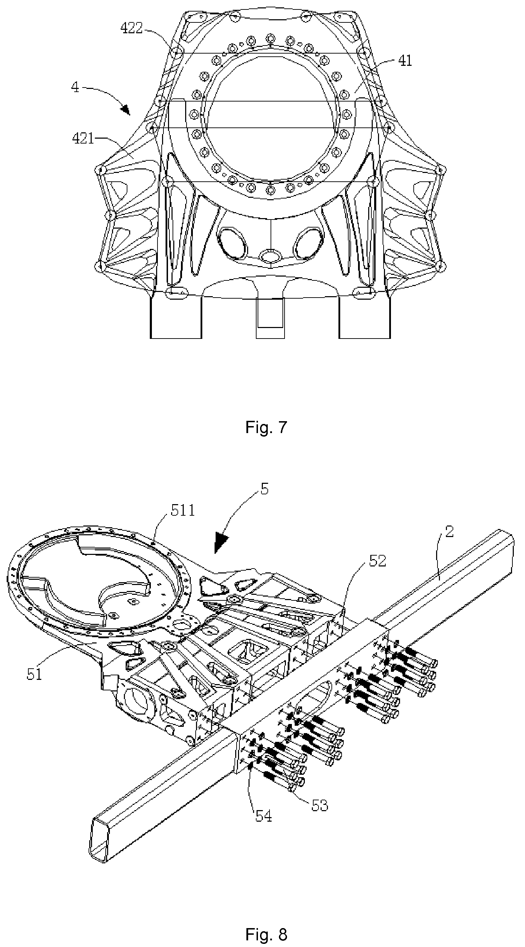

With reference to FIG. 5 and FIG. 6, in the present invention, through comparison by means of finite element analysis, the upper surface of the upper connecting platform 41 of the front frame 4 is designed to be a curved structure. A plurality of support holes 422 is arranged on both the upper surface of the upper connecting platform 41 and the support hole arrangement part 421 of the lower connecting platform 42. The support holes 422 are distributed at outer edges of the upper connecting platform 41 and the support hole arrangement part 421. The uniform layout of the support holes 422 on the front frame 4 makes the load-bearing capacity of the connecting point between the articulated system of the present invention and another platform more uniformly dispersed, thereby improving the bearing performance and anti-torsion capability of the articulated system. In this embodiment of the present invention, in total 24 support holes 422 are arranged on the upper surface of the upper connecting platform 41 and the support hole arrangement part 421 of the lower connecting platform 42. As shown in FIG. 7, one mesh-form stress surface is formed among the 24 support holes 422, so that the load-bearing capacity on the front frame is more uniformly dispersed, and the articulation strength and anti-twist capability of the system is ensured.

A flange 423 is symmetrically arranged on the left and right sides of the lower connecting platform 42. The flange 423 is located at a position, near the dome-hinge mounting part 43, of the support hole arrangement part 421. A plurality of connecting columns 424 is further arranged on the flange 423, and some of the support holes 422 on the support hole arrangement part 421 are correspondingly arranged on these connecting columns 424.

The dome-hinge mounting part 43 is located between the upper connecting platform 41 and the lower connecting platform 42, and is used to mount a dome hinge for fixing the front frame 4 on the front beam assembly 1. The dome-hinge mounting part 43 includes a first dome-hinge mounting part 431, a second dome-hinge mounting part 432, and a third dome-hinge mounting part 433. The first dome-hinge mounting part 431 and the second dome-hinge mounting part 432 have the same structure. Two dome-hinge mounting parts 43 are generally arranged on the front frame 4 of the articulated chassis system 3 for a front- and centre-drive bus. In the present invention, the third dome-hinge mounting part 433 is added between the first dome-hinge mounting part 431 and the second dome-hinge mounting part 432, so as to achieve fixed connection between the front frame 4 and the front beam assembly 1 by means of three dome hinges, thereby enhancing the connection strength between the front frame 4 and the front beam assembly 1 and improving the bearing performance of the articulated system of the present invention.

A dome-hinge mounting hole 434 is arranged on each of the first and second dome-hinge mounting parts 431, 432 and the third dome-hinge mounting part 433. A dome hinge is mounted in the dome-hinge mounting hole 434, and the two ends of the dome hinge that extend out from the dome-hinge mounting hole 434 are fixed inside the grooves 19 of the first fixing base 17 and the second fixing base 18 of each support 13, 14, 15, thereby achieving fixed connection between the front frame 4 and the dome-hinge support 12 of the front beam assembly 1 by means of a dome hinge.

As shown in FIG. 6, the third dome-hinge mounting part 433 includes a dome-hinge mounting body 4331 and an articulated arm 4332. The dome-hinge mounting body 4331 is a transversely arranged hollow cylinder, inside which the dome-hinge mounting hole 434 for mounting a dome hinge is arranged. One end of the articulated arm 4332 has a fixing portion 4333 connected to the dome-hinge mounting body 4331. The fixing portion 4333 is attached on a part of the outer surface of the dome-hinge mounting body 4331, and is fixed to or is integrated with the dome-hinge mounting body 4331. The other end of the articulated arm 4332 is integrated with the front frame 4. In this embodiment of the present invention, two articulated arms 4332 are arranged.

The rear frame 5 is fixedly connected to the rear beam assembly 2. As shown in FIG. 8, the rear frame 5 has a bearing fixing surface 51, and a plurality of outer race fixing holes 511 is arranged in a circumferential direction of the bearing fixing surface 51. Second bolt holes 52 corresponding to the first bolt holes 23 of the rear beam assembly 2 are arranged on one end, away from the bearing fixing surface 51, of the rear frame 5, and the rear frame 5 is fixedly connected to the rear beam assembly 2 by means of the fit between a connecting bolt 53 and a lock washer 54.

In the present invention, by means of finite element analysis, the structure of the front frame 4 and the rear frame 5 uses a brand new design. Therefore, while the structural strength of the front and rear frames is ensured, the flowability and formability of the front and rear frames in a casting process are more rational. Excessive parts are removed, so that the structure of the entire articulated system is more rational, practical, and lightweight. Meanwhile, raw materials are saved, and an unnecessary resource waste is avoided.

As shown in FIG. 9, the turntable bearing 6 includes an outer race 61 and an inner race 62 that are rotatable with respect to each other, and the front frame 4 is arranged above the turntable bearing 6 and is fixedly connected to the inner race 62 of the turntable bearing 6. The rear frame 5 is arranged below the turntable bearing 6, and is fixedly connected to the outer race 61 of the turntable bearing 6. The front frame 4 and the rear frame 5 are respectively connected to the inner race 62 and the outer race 61 of the turntable bearing 6 to achieve mutual rotation.

Multiple front frame fixing holes 63 used to fix a front frame are arranged at an interval in a circumferential direction of the inner race 62 of the turntable bearing 6. Inner race fixing holes 44 corresponding to the front frame fixing holes 63 are arranged on the front frame 4, and the front frame 4 is fixedly connected to the inner race 62 of the turntable bearing 6 by means of a securing piece such as a screw. A plurality of rear frame fixing holes 64 used to fix the rear frame 5 is arranged at an interval in the circumferential direction of the outer race 61 of the turntable bearing 6. The outer race fixing holes 511 corresponding to the rear frame fixing holes 64 are arranged on the rear frame 5, and the rear frame 5 is also fixedly connected to the outer race 61 of the turntable bearing 6 by means of a securing piece such as a screw. In this embodiment of the present invention, a quantity of the arranged front frame fixing holes is 24 and a quantity of the arranged rear frame fixing holes is 24, so that the connection strength between the front and rear frames and the turntable bearing is greatly improved. Compared with a conventional single dome-hinge structure, curved rotation of the front frame and the rear frame of the present invention is achieved by means of the turntable bearing, so that the connection strength is greatly improved.

A ball raceway 65 used to mount a ball is arranged between the inner race 62 and the outer race 61, and a plurality of balls having an equal diameter is arranged inside the ball raceway 65 to fill the ball raceway 65. A mutually rotatable connection of the outer race 61 and the inner race 62 is achieved by means of the balls. A quantity of the balls is set according to a specific volume of the ball raceway 65. A plurality of lubrication interfaces 66 is further arranged on a circumferential surface of the inner race 62, and the lubrication interfaces 66 are connected to the ball raceway 65. In this embodiment of the present invention, two lubrication interfaces 66 are arranged at an interval on the circumferential surface of the inner race 62.

As shown in FIG. 9, the articulated chassis system 3 for a front- and centre-drive articulated bus further includes a lubrication apparatus 7. The lubrication apparatus 7 includes a lubricator 71 and a lubrication pipe 72. An end of the lubrication pipe 72 is connected inside the lubrication interface 66 and is connected to the ball raceway 65. The lubricator 71 is fixedly mounted on the rear frame 5, and provides a lubricant to the ball raceway 65 by means of the lubrication pipe 72, thereby ensuring that an accident does not occur in the turntable bearing 6 because the balls are blocked, and meanwhile, the service life of the balls is also improved.

In addition, both the front frame and the rear frame use a cavity structure. During specific implementation of the present invention, the thickness of the articulated chassis system for a front- and centre-drive articulated bus of the present invention is only 228 mm, so that the articulated chassis system can be used in a low-floor articulated bus and has a relatively wide application scope. For blanks of the front frame and the rear frame of the articulated chassis system for a front- and centre-drive articulated bus of the present invention, front and rear frames of an articulated chassis system for a rear-drive articulated vehicle from our company can be used, so that it is achieved that blanks are interchangeable, and a production cost is reduced.

The technical content and technical features of the present invention are disclosed above. However, a person skilled in the art may still make, based on the teachings and disclosure of the present invention, various replacements and modifications without departing from the spirit of the present invention. Therefore, the protection scope of the present invention should not be limited to the content disclosed in the embodiments, and instead, should comprise replacements and modifications without departing from the present invention, and these replacements and modifications fall within the claims of the patent.

## Claims

1. An articulated chassis system for a front- and centre-drive articulated bus, comprising a front frame, a rear frame, and a turntable bearing, the front frame and the rear frame being rotatably connected by means of the turntable bearing, wherein the front frame comprises an upper connecting platform and a lower connecting platform located below the upper connecting platform, one end of the upper connecting platform being connected to one end of the lower connecting platform, and a dome-hinge mounting part located between the upper connecting platform and the lower connecting platform being arranged at the other end; the lower connecting platform has a support hole arrangement part being exposed outside the upper connecting platform; the upper surface of the upper connecting platform is curved; and a plurality of support holes is arranged on both the upper surface of the upper connecting platform and the support hole arrangement part of the lower connecting platform, the support holes being distributed at outer edges of the upper connecting platform and the support hole arrangement part.

2. The articulated chassis system for a front- and centre-drive articulated bus according to claim 1, wherein a flange is symmetrically arranged on the left and right sides of the lower connecting platform, and the flange is located at a position, near the dome-hinge mounting part, of the support hole arrangement part.

3. The articulated chassis system for a front- and centre-drive articulated bus according to claim 2, wherein a plurality of connecting columns is arranged on the flange, and some of the support holes of the support hole arrangement part are arranged on the connecting columns.

4. The articulated chassis system for a front- and centre-drive articulated bus according to any one of claims 1 to 3, wherein the dome-hinge mounting part comprises a first dome-hinge mounting part, a second dome-hinge mounting part, and a third dome-hinge mounting part located between the first and second dome-hinge mounting parts, and a dome-hinge mounting hole is arranged on each dome-hinge mounting part.

5. The articulated chassis system for a front- and centre-drive articulated bus according to claim 4, wherein the third dome-hinge mounting part comprises a dome-hinge mounting body and two articulated arms fixed on the outer surface of the dome-hinge mounting body, and the dome-hinge mounting hole is arranged inside the dome-hinge mounting body.

6. The articulated chassis system for a front- and centre-drive articulated bus according to any one of claims 1 to 3, wherein the turntable bearing comprises an inner race and an outer race, the inner race and the outer race are concentrically arranged and are rotatably connected to each other, the front frame is fixedly connected to the inner race of the turntable bearing, the rear frame is fixedly connected to the outer race of the turntable bearing, and the front frame and the rear frame are respectively connected to the inner race and the outer race of the turntable bearing to achieve mutual rotation.

7. The articulated chassis system for a front- and centre-drive articulated bus according to claim 6, wherein a plurality of rear frame fixing holes configured to fix a rear frame is uniformly arranged in a circumferential direction of the outer race of the turntable bearing, and outer race fixing holes corresponding to the rear frame fixing holes are arranged on the rear frame; and a plurality of front frame fixing holes used to fix a front frame is uniformly arranged in a circumferential direction of the inner race of the turntable bearing, and inner race fixing holes corresponding to the front frame fixing holes are arranged on the front frame.

8. The articulated chassis system for a front- and centre-drive articulated bus according to claim 6, wherein a ball raceway is arranged between the inner race and the outer race of the turntable bearing, a plurality of balls is arranged inside the ball raceway, and mutual rotation of the inner race and the outer race of the turntable bearing is achieved by means of the balls.

9. The articulated chassis system for a front- and centre-drive articulated bus according to claim 1, further comprising a lubrication apparatus, wherein the lubrication apparatus comprises a lubricator and a lubrication pipe, and the lubricator is mounted on the rear frame.

10. The articulated chassis system for a front- and centre-drive articulated bus according to claim 9, wherein a plurality of lubrication interfaces is further arranged on the circumferential surface of an inner race of the turntable bearing, and the lubrication pipe is connected to the lubrication interface.
